# EUROPEAN PATENT APPLICATION

(11) **EP 4 838 290 A1**
(43) Date of publication of application: **11.11.2026**
(21) Application number: 25855682.8
(22) Date of filing: 20.05.2025
(51) Int. Cl.: G02C 5/22, G02C 5/16

(54) **ELASTIC HINGE FOR GLASSES AND GLASSES**

(30) Priority: 21.08.2024 CN 202422033364 U
(71) Applicant: Gaco International Pte.Ltd., Singapore 068902 (SG)
(72) Inventor: CHENG, Chao, Shenzhen, Guangdong 518000 (CN); ZHENG, Jintong, Shenzhen, Guangdong 518000 (CN)
(74) Representative: Herrero & Asociados, S.L.
(86) International application number: PCT/CN2025/095979
(87) International publication number: WO 2026/040511

(57) **Abstract**

To overcome the problems of temple wobbling and insufficient stability in existing elastic hinges for eyewear, the present application provides an elastic hinge for eyewear and eyewear. The elastic hinge for eyewear includes a first connecting part, a second connecting part, an elastic member, and a damping member. One end of the first connecting part is provided with a first hinge portion, and one end of the second connecting part is provided with a second hinge portion. The first hinge portion and the second hinge portion are pivotally connected to form a hinge structure. The elastic member is arranged around the first hinge portion. The damping member abuts against the elastic member or the second hinge portion to provide damping when a temple is unfolded or folded. The elastic hinge for eyewear provided by the present application forms damping through friction generated by the damping member to achieve hovering of the temple at any point during unfolding and folding, and maintains the stability of the temple at the hovering position.

## Description

### Technical Field

The present application relates to the technical field of eyewear, and more particularly, to an elastic hinge for eyewear and eyewear.

### Background

Eyewear hinges are used to connect temples and eyewear frames. Typically, the temples in spectacle frames used by people are strip-shaped. The temples and the frame are connected via a hinge structure. When the eyewear is in use, the temples are fully unfolded, rested on the ears, and clamped against both sides of the face to serve the function of securing the eyewires (rims). The opening range of the temples often cannot exactly adapt to the head width of the wearer. If the opening range of the temples is too small, it will exert a clamping effect on the head, causing discomfort during wear. If the opening range of the temples is too large, it will lead to insufficient stability when wearing the eyewear, resulting in the problem of the eyewear frame shifting easily.

There is a type of existing elastic hinge for eyewear that provides a certain degree of elasticity between the temple and the frame by incorporating an elastic structure, thereby improving adaptability and wearing comfort. However, the elasticity of this type of elastic hinge is mainly manifested after the opening angle of the temple reaches 90°. During the process of unfolding and folding the temples, the resistance of the temple is relatively low, leading to problems such as wobbling of the temple and insufficient stability when the temple is in a hovering position.

### Summary

To address the issues of temple wobbling and insufficient stability in existing elastic hinges for eyewear, the present application provides an elastic hinge for eyewear and an eyewear product.

The technical solutions adopted by the present application to solve the above technical problems are as follows:
In one aspect, the present application provides an elastic hinge for eyewear, including: a first connecting part, a second connecting part, an elastic member, and a damping member;
one end of the first connecting part is provided with a first hinge portion, and one end of the second connecting part is provided with a second hinge portion;
the first hinge portion and the second hinge portion are pivotally connected to form a hinge structure;
the elastic member is a ring-like structure having an opening, the elastic member is arranged around the first hinge portion, and the elastic member has a first end and a second end at a position of the opening, the first end and the second end being movable toward or away from each other;
the damping member abuts against the elastic member or the second hinge portion to provide damping when a temple is unfolded or folded;
when the temple is unfolded to approximately 90°, the first connecting part directly or indirectly abuts against the first end, and the second connecting part directly or indirectly abuts against the second end; and
when the temple is further expanded outward from approximately 90°, a distance between the first end and the second end gradually decreases, and the elastic member undergoes elastic deformation to provide elasticity for restricting further outward expansion of the temple.

Optionally, the damping member is a plastic member.

Optionally, the number of the first hinge portion is one, the number of the second hinge portion is two, the elastic member is arranged around an outer periphery of the first hinge portion, the two second hinge portions are arranged on two sides of the first hinge portion, and a hinge screw is provided to pass through the first hinge portion and the two second hinge portions to form the hinge structure.

Optionally, the damping member includes a damping portion, a first washer, and a second washer; the first washer and the second washer are connected to the damping portion in parallel and are spaced apart from each other; the damping portion abuts against the elastic member or the second hinge portion; the first washer and the second washer are respectively located on two sides of the first hinge portion; and the first washer and the second washer are located between the first hinge portion and the second hinge portions.

Optionally, one side of the damping portion abuts against the first connecting part, and the other side of the damping portion abuts against the second hinge portion.

Optionally, the first connecting part is provided with a first slot, the first end of the elastic member is fitted into the first slot, an inner wall of the second hinge portion is provided with a second slot, and the second end of the elastic member is provided with two blocks; when the temple is unfolded to approximately 90°, the two blocks are respectively fitted into and abut against the two second slots.

Optionally, the damping portion is embedded in the second connecting part, and the damping portion abuts against an outer wall of the elastic member.

Optionally, the first connecting part is provided with a first slot, the first end of the elastic member is fitted into the first slot, the second connecting part is provided with a third slot at a position between the two second hinge portions, the damping portion is embedded and fixed in the third slot, and the outer wall of the elastic member abuts against a side wall of the damping portion, the second end of the elastic member is provided with two blocks, and when the temple is unfolded to approximately 90°, the two blocks abut against the damping portion.

Optionally, the elastic member is selected from a metal spring sheet or a non-metal spring sheet; the metal spring sheet is selected from one of a zirconium-based amorphous alloy spring sheet, a copper-based amorphous alloy spring sheet, an iron-based amorphous alloy spring sheet, a magnesium-based amorphous alloy spring sheet, and a titanium-based amorphous alloy spring sheet.

In another aspect, the present application provides an eyewear product, including the elastic hinge for eyewear as described above, an eyewear frame, and a temple. An endpiece is provided on the eyewear frame. One of the first connecting part and the second connecting part is connected to the endpiece, and the other of the first connecting part and the second connecting part is connected to the temple.

According to the elastic hinge for eyewear provided by the present application, compared to other existing elastic hinge structures, the elastic hinge for eyewear provided by the present application adopts a design in which the elastic member surrounds the first hinge portion. The internal space of the elastic member is filled by the first hinge portion, achieving full utilization of space and reducing the volume of the elastic hinge for eyewear. This avoids aesthetic or wearing comfort issues caused by an excessively large volume of the elastic hinge for eyewear.

At the same time, to ensure the stability of the temple during the unfolding and folding process, a damping member is provided. The damping member abuts against the elastic member or the second hinge portion so that during the relative rotation between the first connecting part and the second connecting part, damping is formed by the friction generated by the damping member. This achieves hovering of the temple at any point during the unfolding and folding process and maintains the stability of the temple at the hovering position. Particularly, when the temple is in an unfolded or folded state, even holding the eyewear frame alone will not cause the temple to wobble.

### Brief Description of The Drawings

FIG. 1 is a schematic structural view of an elastic hinge for eyewear according to a first embodiment of the present application.
FIG. 2 is an exploded structural view of the elastic hinge for eyewear according to the first embodiment of the present application.
FIG. 3 is a schematic structural view of an elastic hinge for eyewear according to a second embodiment of the present application.
FIG. 4 is an exploded structural view of the elastic hinge for eyewear according to the second embodiment of the present application.

The reference numerals in the drawings are as follows:
1. First connecting part; 11. First hinge portion; 12. First slot; 2. Second connecting part; 21. Second hinge portion; 22. Third slot; 23. Second slot; 3. Damping member; 31. Damping portion; 32. First washer; 33. Second washer; 4. Elastic member; 41. First end; 42. Second end; 421. Block.

### Detailed Description

To clarify the technical problems, technical solutions, and advantageous effects of the present application, the following further describes the present application in detail in conjunction with the accompanying drawings and embodiments. It should be understood that the specific embodiments described herein are merely for explaining the present application and are not intended to limit it.

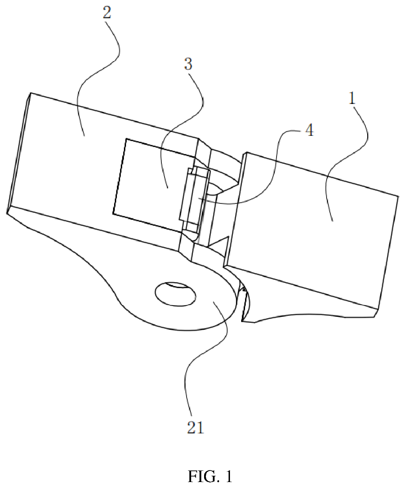

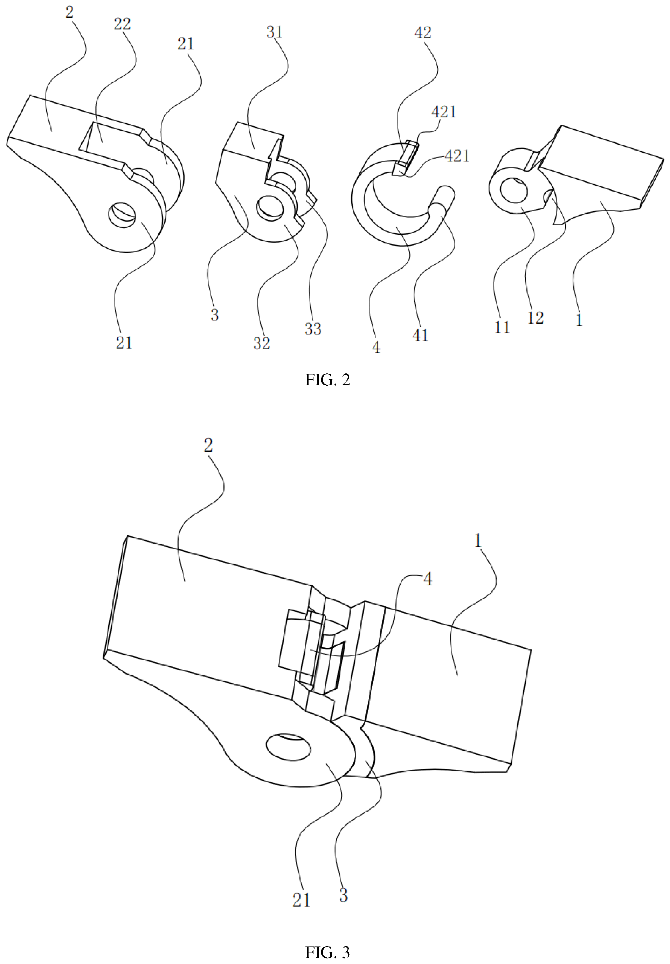

Referring to FIG. 1 and FIG. 2, a first embodiment of the present application provides an elastic hinge for eyewear, including a first connecting part 1, a second connecting part 2, an elastic member 4, and a damping member 3. One end of the first connecting part 1 is provided with a first hinge portion 11, and one end of the second connecting part 2 is provided with a second hinge portion 21. The first hinge portion 11 and the second hinge portion 21 are pivotally connected to form a hinge structure. The elastic member 4 is a ring-like structure having an opening. The elastic member 4 is arranged around the first hinge portion 11. The elastic member 4 has a first end 41 and a second end 42 at a position of the opening, in which the first end 41 and the second end 42 are movable toward or away from each other. The damping member 3 abuts against the elastic member 4 or the second hinge portion 21 to provide damping when a temple is unfolded or folded. When the temple is unfolded to approximately 90°, the first connecting part 1 directly or indirectly abuts against the first end 41, and the second connecting part 2 directly or indirectly abuts against the second end 42. When the temple is further expanded outward from approximately 90°, a distance between the first end 41 and the second end 42 gradually decreases, and the elastic member 4 undergoes elastic deformation to provide elasticity for restricting further outward expansion of the temple.

Compared to other existing elastic hinge structures, the elastic hinge for eyewear adopts a design in which the elastic member 4 surrounds the first hinge portion 11. The internal space of the elastic member 4 is filled by the first hinge portion 11, achieving full utilization of space and reducing the volume of the elastic hinge for eyewear. This avoids aesthetic or wearing comfort issues caused by an excessively large volume of the elastic hinge for eyewear. At the same time, to ensure the stability of the temple during the unfolding and folding process, a damping member 3 is provided. The damping member 3 abuts against the elastic member 4 or the second hinge portion 21. During the relative rotation between the first connecting part 1 and the second connecting part 2, damping is formed by the friction generated by the damping member 3 to achieve hovering of the temple at any point during the unfolding and folding process and maintain the stability of the temple at the hovering position. Particularly, when the temple is in an unfolded or folded state, even holding the eyewear frame alone at this time will not cause the temple to wobble.

In this embodiment, the damping member 3 is a plastic member.

Compared to other materials, using a plastic member as the damping member 3 provides stable damping characteristics. Specifically, plastics with wear-resistant properties can be selected, such as polyoxymethylene, nylon, polycarbonate, polyurethane, polytetrafluoroethylene, polyamide, polysulfone, polyetheretherketone, polybutylene terephthalate, and polyphenylene sulfide. Fillers or fibers can also be added to the plastic member to provide a reinforcing effect.

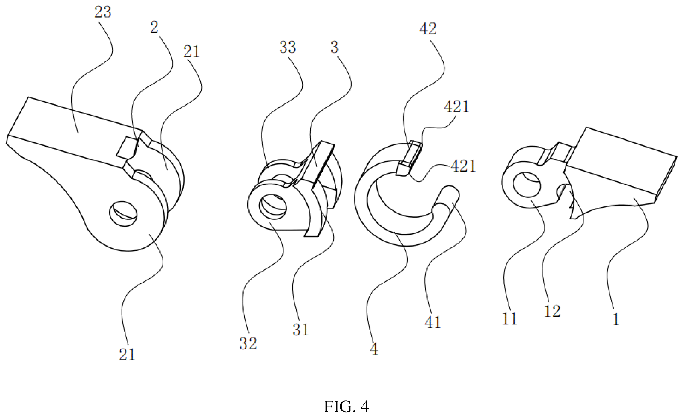

As shown in FIG. 3 and FIG. 4, in the second embodiment of the present application, the damping member 3 abuts against the second hinge portion 21.

During the process of unfolding and folding the temple, the damping member 3 and the second hinge portion 21 slide relative to each other, and a damping effect is generated through the friction between the damping member 3 and the second hinge portion 21 to ensure the stability of the temple.

As shown in FIG. 1 and FIG. 2, in the first embodiment of the present application, the damping member 3 abuts against the elastic member 4.

During the process of unfolding and folding the temple, the damping member 3 and the elastic member 4 slide relative to each other, and a damping effect is generated through the friction between the damping member 3 and the elastic member 4 to ensure the stability of the temple.

Compared to the structure of the second embodiment, the method in the first embodiment of having the damping member 3 abut against the elastic member 4 to achieve damping offers a longer service life, superior stability, and wider installation tolerance. Because the elastic member 4 itself is elastic, having the elastic member 4 abut against the damping member 3 allows the pressure between the elastic member 4 and the damping member 3 to be maintained in a moderate state by relying on the elasticity of the elastic member 4. This avoids the problems of severe wear caused by excessive pressure or insufficient damping caused by insufficient pressure. At the same time, after the damping member 3 undergoes a certain amount of wear, it can still maintain a certain damping effect by relying on the adaptive deformation of the elastic member 4. Compared to the structure of the second embodiment, it has better damping retention after wear and a higher dimensional tolerance during installation.

In some embodiments, the number of the first hinge portion 11 is one, and the number of the second hinge portion 21 is two. The elastic member 4 is arranged around an outer periphery of the first hinge portion 11. The two second hinge portions 21 are arranged on two sides of the first hinge portion 11. A hinge screw is provided to pass through the first hinge portion 11 and the two second hinge portions 21 to form a hinge structure.

The first hinge portion 11 and the second hinge portion 21 have a ring-like structure and are coaxially arranged. The hinge screw is fixed to the two second hinge portions 21, and the first hinge portion 11 rotates relative to the hinge screw.

An inner diameter of the elastic member 4 is greater than an outer diameter of the first hinge portion 11, so that a deformation space is left between the elastic member 4 and the first hinge portion 11, which is beneficial for ensuring the elastic effect of the elastic member 4.

An opening width of the elastic member 4 is smaller than the outer diameter of the first hinge portion 11 to prevent the elastic member 4 from falling off from the first hinge portion 11.

The outer diameter of the second hinge portion 21 is greater than the outer diameter of the first hinge portion 11, so that the elastic member 4 is at least partially located in a projected overlapping region of the two second hinge portions 21. The two second hinge portions 21 provide a certain degree of protection for the elastic member 4 to avoid external debris from entering the gap between the elastic member 4 and the first hinge portion 11.

In some embodiments, the damping member 3 includes a damping portion 31, a first washer 32, and a second washer 33. The first washer 32 and the second washer 33 are connected to the damping portion 31 in parallel and are spaced apart from each other. The damping portion 31 abuts against the elastic member 4 or the second hinge portion 21. The first washer 32 and the second washer 33 are respectively located on two sides of the first hinge portion 11, and the first washer 32 and the second washer 33 are located between the first hinge portion 11 and the second hinge portions 21.

Both the first hinge portion 11 and the second hinge portion 21 are metal parts. If the first hinge portion 11 and the second hinge portion 21 are in direct rigid contact, wear is likely to occur during long-term rotation, leading to a decrease in friction between the first connecting part 1 and the second connecting part 2 and resulting in structural instability. The first washer 32 and the second washer 33 are provided to have a certain damping effect similar to the damping portion 31. More importantly, the first washer 32 and the second washer 33 function to prevent wear between the first connecting part 1 and the second connecting part 2. Since the first washer 32 and the second washer 33 are plastic members, their surfaces in contact with metal have a deformation adaptability, which can reduce surface wear during long-term use. Furthermore, even if wear occurs, replacing the damping member 3 alone offers a better cost advantage, because the first connecting part 1 and the second connecting part 2 are usually integrally formed with the eyewear frame and the temple respectively, involving higher replacement costs.

As shown in FIG. 3 and FIG. 4, in the second embodiment, one side of the damping portion 31 abuts against the first connecting part 1, and the other side of the damping portion 31 abuts against the second hinge portion 21.

During the rotation of the temple, the positions of the damping portion 31 and the first connecting part 1 remain stationary relative to each other, and the second hinge portion 21 and the damping portion 31 slide relative to each other.

In the second embodiment, the first connecting part 1 is provided with a first slot 12, and the first end 41 of the elastic member 4 is fitted into the first slot 12. The first slot 12 serves to fix the first end of the elastic member 4, while the second end of the elastic member 4 is a free end. An inner wall of the second hinge portion 21 is provided with a second slot 23, and the second end 42 of the elastic member 4 is provided with two blocks 421. When the temple is unfolded to approximately 90°, the two blocks 421 are respectively fitted into and abut against the two second slots 23. During the process of unfolding the temple to approximately 90°, the first connecting part 1 drives the damping portion 31 to rotate relative to the second connecting part 2, and the damping portion 31 slides around an outer wall of the second hinge portion 21 to provide damping. When the temple is further expanded outward from approximately 90°, the second hinge portion 21 drives the second end 42 of the elastic member 4, and the first connecting part 1 drives the first end 41 of the elastic member 4, causing the first end 41 and the second end 42 of the elastic member 4 to move relatively closer to each other, which serves to provide elasticity for outward expansion of the temple.

As shown in FIG. 1 and FIG. 2, in the first embodiment, the damping portion 31 is embedded in the second connecting part 2, and the damping portion 31 abuts against the outer wall of the elastic member 4.

In the first embodiment, the first connecting part 1 is provided with a first slot 12, and the first end 41 of the elastic member 4 is fitted into the first slot 12. The first slot 12 serves to fix the first end of the elastic member 4, while the second end of the elastic member 4 is a free end. The second connecting part 2 is provided with a third slot 22 at a position between the two second hinge portions 21. The damping portion 31 is embedded and fixed in the third slot 22 so that the positions of the damping member 3 and the second connecting part 2 are fixed relative to each other. The outer wall of the elastic member 4 abuts against a side wall of the damping portion 31. The second end 42 of the elastic member 4 is provided with two blocks 421. When the temple is unfolded to approximately 90°, the two blocks 421 abut against the damping portion 31. During the process of unfolding the temple to approximately 90°, the second connecting part 2 drives the damping portion 31 to rotate relative to the first connecting part 1. At this time, since one end of the elastic member 4 is fixed relative to the first connecting part 1, the damping portion 31 slides around the outer wall of the elastic member 4 to provide damping. When the temple is further expanded outward from approximately 90°, the damping portion 31 drives the second end 42 of the elastic member 4, and the first connecting part 1 drives the first end 41 of the elastic member 4, causing the first end 41 and the second end 42 of the elastic member 4 to move relatively closer to each other, which serves to provide elasticity for outward expansion of the temple.

In some embodiments, the elastic member 4 is selected from a metal spring sheet or a non-metal spring sheet. The metal spring sheet is selected from one of a zirconium-based amorphous alloy spring sheet, a copper-based amorphous alloy spring sheet, an iron-based amorphous alloy spring sheet, a magnesium-based amorphous alloy spring sheet, and a titanium-based amorphous alloy spring sheet.

In a preferred embodiment, the elastic member 4 is selected from a zirconium-based amorphous alloy.

Zirconium-based amorphous alloy has high material strength, with a tensile strength of 800 to 1500 MPa, which is 2.5 times that of 316 stainless steel and 1.5 times that of titanium alloy. The hinge structure can be designed to be thinner and lighter, reducing the weight of accessories and improving the comfort of the wearer. At the same time, the high strength of the material ensures that the eyewear does not undergo deformation during long-term use, improving the quality of the eyewear. Furthermore, the Vickers hardness of zirconium-based amorphous alloy is 440 to 540 Hv, which far exceeds that of stainless steel and titanium alloy, resulting in low wear during use. It does not undergo deformation or a decrease in elasticity even after long-term use. The elastic deformation rate of zirconium-based amorphous alloy material is 0.6% to 1.5%, which is 6 times higher than that of 316 stainless steel, providing better elasticity and wearing comfort.

Another embodiment of the present application provides an eyewear product, including the elastic hinge for eyewear as described above, an eyewear frame, and a temple. An endpiece is provided on the eyewear frame. One of the first connecting part 1 and the second connecting part 2 is connected to the endpiece, and the other of the first connecting part 1 and the second connecting part 2 is connected to the temple.

The above are only preferred embodiments of the present application and are not intended to limit the present application. Any modifications, equivalent replacements, and improvements made within the spirit and principles of the present application shall fall within the scope of protection of the present application.

## Claims

1. An elastic hinge for eyewear, comprising: a first connecting part, a second connecting part, an elastic member, and a damping member;
wherein one end of the first connecting part is provided with a first hinge portion, and one end of the second connecting part is provided with a second hinge portion;
the first hinge portion and the second hinge portion are pivotally connected to form a hinge structure;
the elastic member is a ring-like structure having an opening, the elastic member is arranged around the first hinge portion, and the elastic member has a first end and a second end at a position of the opening, the first end and the second end being movable toward or away from each other;
the damping member abuts against the elastic member or the second hinge portion to provide damping when a temple is unfolded or folded;
when the temple is unfolded to approximately 90°, the first connecting part directly or indirectly abuts against the first end, and the second connecting part directly or indirectly abuts against the second end; and
when the temple is further expanded outward from approximately 90°, a distance between the first end and the second end gradually decreases, and the elastic member undergoes elastic deformation to provide elasticity for restricting further outward expansion of the temple.

2. The elastic hinge for eyewear of claim 1, wherein the damping member is a plastic member.

3. The elastic hinge for eyewear of claim 1, wherein the number of the first hinge portion is one, the number of the second hinge portion is two, the elastic member is arranged around an outer periphery of the first hinge portion, the two second hinge portions are arranged on two sides of the first hinge portion, and a hinge screw is provided to pass through the first hinge portion and the two second hinge portions to form the hinge structure.

4. The elastic hinge for eyewear of claim 3, wherein the damping member comprises a damping portion, a first washer, and a second washer; the first washer and the second washer are connected to the damping portion in parallel and are spaced apart from each other; the damping portion abuts against the elastic member or the second hinge portion; the first washer and the second washer are respectively located on two sides of the first hinge portion; and the first washer and the second washer are located between the first hinge portion and the second hinge portions.

5. The elastic hinge for eyewear of claim 4, wherein one side of the damping portion abuts against the first connecting part, and the other side of the damping portion abuts against the second hinge portion.

6. The elastic hinge for eyewear of claim 5, wherein the first connecting part is provided with a first slot, the first end of the elastic member is fitted into the first slot, an inner wall of the second hinge portion is provided with a second slot, and the second end of the elastic member is provided with two blocks; when the temple is unfolded to approximately 90°, the two blocks are respectively fitted into and abut against the two second slots.

7. The elastic hinge for eyewear of claim 4, wherein the damping portion is embedded in the second connecting part, and the damping portion abuts against an outer wall of the elastic member.

8. The elastic hinge for eyewear of claim 7, wherein the first connecting part is provided with a first slot, the first end of the elastic member is fitted into the first slot, the second connecting part is provided with a third slot at a position between the two second hinge portions, the damping portion is embedded and fixed in the third slot, and the outer wall of the elastic member abuts against a side wall of the damping portion, the second end of the elastic member is provided with two blocks, and when the temple is unfolded to approximately 90°, the two blocks abut against the damping portion.

9. The elastic hinge for eyewear of claim 1, wherein the elastic member is selected from a metal spring sheet or a non-metal spring sheet; the metal spring sheet is selected from one of a zirconium-based amorphous alloy spring sheet, a copper-based amorphous alloy spring sheet, an iron-based amorphous alloy spring sheet, a magnesium-based amorphous alloy spring sheet, and a titanium-based amorphous alloy spring sheet.

10. An eyewear product, comprising the elastic hinge for eyewear of any one of claims 1 to 9, an eyewear frame, and a temple; an endpiece is provided on the eyewear frame; one of the first connecting part and the second connecting part is connected to the endpiece, and the other of the first connecting part and the second connecting part is connected to the temple.
